# EUROPÄISCHE PATENTSCHRIFT

(11) **EP 3 489 084 B1**
(45) Veröffentlichungstag und Bekanntmachung des Hinweises auf die Patenterteilung: **18.08.2021**
(21) Anmeldenummer: 17203067.8
(22) Anmeldetag: 22.11.2017
(51) Int. Cl.: B60Q 1/115

(54) **FAHRZEUGSCHEINWERFER**
VEHICLE HEADLAMP
PHARE DE VÉHICULE

(43) Veröffentlichungstag der Anmeldung: 29.05.2019
(73) Patentinhaber: ZKW Group GmbH, 3250 Wieselburg (AT)
(72) Erfinder: Edletzberger, Thomas, 3382 Schollach (AT); Ebenführer, Markus, 3251 Purgstall (AT)
(74) Vertreter: Patentanwaltskanzlei Matschnig & Forsthuber OG

(56) Entgegenhaltungen:
- EP-A2- 0 737 600
- EP-A2- 2 708 417
- DE-A1-102008 003 706
- FR-A5- 2 182 565
- JP-A- 2014 100 979
- US-B1- 6 430 521

## Beschreibung

Die Erfindung betrifft einen Fahrzeugscheinwerfer, umfassend ein Scheinwerfergehäuse, zumindest ein Lichtmodul, welches eingerichtet ist, einen Lichtstrahl zu emittieren, und ferner umfassend einen Modulträger, der das zumindest eine Lichtmodul trägt und welcher neigbar im Scheinwerfergehäuse gelagert ist, sowie ein Steuergerät, das ein Sensormittel und einen Speicher umfasst und welches eingerichtet ist, mittels des Sensormittels zumindest zwei Betriebsparameter des Fahrzeugscheinwerfers zu erfassen, sowie eine Baugruppe zur Leuchtweitenregelung, die eine zwischen dem Scheinwerfergehäuse und dem Modulträger angeordnete Stelleinrichtung umfasst, welche eingerichtet ist, den Modulträger bezüglich des Scheinwerfergehäuses zu neigen.

Bei der Entwicklung der gegenwärtigen Scheinwerfersysteme steht immer mehr der Wunsch im Vordergrund, ein möglichst hochaufgelöstes, homogenes Lichtbild auf die Fahrbahn projizieren zu können. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt.

Prinzipiell entspricht das Lichtbild im verwendeten Sinn einer Projektion auf eine vertikale Fläche entsprechend der einschlägigen Normen, die sich auf die KFZ-Beleuchtungstechnik beziehen.

Die DE 102008003706 zeigt einen Kraftfahrzeugscheinwerfer in dem ein Lichtmodul aufgenommen ist, das mittels einer Leuchtweitenstelleinrichtung lagerverstellbar ist, um wenigstens eine Verteilung des emittierten Abblendlichtes relativ zur Horizontalen zu realisieren. Dabei wird eine Temperaturmessung im Scheinwerfergehäuse vorgesehen, um eine temperaturbedingte Verlagerung des Abblendlichtes zu bestimmen und durch die Leuchtweitenstelleinrichtung zu kompensieren. Die US 6 430 521 B1 zeigt einen Kraftfahrzeugscheinwerfer mit einer Lichtquelle, die an einem Reflektor befestigt ist, wobei der Reflektor verschwenkbar ausgebildet ist. Mit Sensoren werden die Geschwindigkeit, die Fahrzeughöhe und die Fahrzeugneigung erfasst, wobei die Verschwenkung des Reflektors auf Grund der erfassten Sensordaten erfolgt. Fahrzeugscheinwerfer nach dem Stand der Technik sind im Betrieb vielerlei Einflüssen durch die Umwelt und dem Betrieb ausgesetzt. Dabei können diese Einflüsse die Abstrahlung von Licht beeinträchtigen, indem sich während des Betriebs des Fahrzeugs beispielsweise die Einbauposition und Einbaulage des Scheinwerfers verstellt. Das kann dazu führen, dass sich ein Lichtbild, welches ein Scheinwerfer erzeugt und welches in einer Ruheposition justiert oder kalibriert ist, verstellt. Die Verstellung kann sogar so weit reichen, dass das Lichtbild außerhalb der Normen zum Liegen kommt und die Lichtemissionen dadurch unzulässig sind. Es ist häufig mechanisch sehr aufwändig, diesen ungünstigen Einfluss zu begrenzen.

Es ist Aufgabe der Erfindung, die Nachteile des Stands der Technik zu überwinden.

Die Aufgabe wird durch die Merkmale des Anspruchs 1 gelöst.

Die Verstellung bezieht sich immer auf alle vom Fahrzeugscheinwerfer umfassen Lichtmodule, die über den Modulträger zusammen gehalten werden. Diese Ausführung vereinfacht den Kompensationsmechanismus.

Das Lichtmodul kann eine Lichtfunktion beispielsweise eines Abblendlichts, eines Fernlichts oder eines Nebellichts aufweisen. Ebenso kann ein Lichtmodul eine Lichtfunktion eines variablen Fernlichts aufweisen, welches beispielsweise für ein blendfreies Fernlicht oder ein Kurvenlicht für ein Abblendlicht oder ein Fernlicht.

Beispielsweise ist es günstig bei einem blendfreien Fernlicht, bei welchem ein variables oder segmentiertes Licht mit einer hohen Reichweite erzeugt wird, durch eine Leuchtweitenregelung ungünstige Effekte auf die Justierung des Scheinwerfers zu kompensieren, da eine ungewollte Dejustage, welche durch verschiedene Betriebsparameter verursacht sein kann, bereits in einem sehr geringen Umfang eine sehr hohe unerwünschte Ablenkung des projizierten Lichtstrahls in einem großen Abstand vor dem Fahrzeug bewirkt. Durch eine entsprechende Kompensierung kann somit jener Bereich des blendfreien Fernlichts, der einen entgegenkommenden Verkehrsteilnehmer in einem großen Anstand vor dem Fahrzeug nicht beleuchten soll, beispielsweise im Raumwinkel klein gehalten werden und der Bereich, der für den Fahrer des Fahrzeugs auch im Gegenverkehrsfläche beleuchtet werden soll, groß gehalten werden. Es wird erreicht, dass sowohl der Gegenverkehr nicht geblendet wird, als auch der Fahrer eine größtmögliche Ausleuchtung seines Sichtfelds erfährt, was der Verkehrssicherheit zuträglich ist. Würde ein ungünstiger, beispielsweise ein thermisch verursachter Verstelleffekt nicht kompensiert werden, so müsste der Bereich, in dem eine temperaturabhängige Dejustage erwartet wird, durch einen Sicherheits- oder Toleranzbereich vorsorglich berücksichtigt werden, und der Leuchtbereich könnte nicht der Situation entsprechend optimal ausgenützt und ausgeleuchtet werden.

Zur Erzeugung einer segmentierten beziehungsweise variablen Lichtverteilung ist insbesondere die Verwendung von Halbleiter-Lichtquellen, steuerbaren Mikrospiegeln in DLP®- (Digial Light Processing) bzw. DMD-(Digital Micro Mirror) Technologie, Ablenkeinheiten mit zweiachsig verstellbarem Mikrospiegel bzw. verstellbarer Umlenkeinheit in MEMS- ("microelectromechanical systems") oder MOEMS- ("microoptoelectromechanical systems") Technologie und Laser-Lichtquelle, Modulationseinheiten mit einer Flüssigkristall-Matrix, sowie eine Matrix aus LEDs vorteilhaft, wie aus zahlreichen Patentanmeldungen der Anmelderin bekannt. Durch den Einsatz von Halbleiter-Lichtquellen in einem oder mehreren Lichtmodulen kann die Abwärme eines jeweiligen Lichtmoduls reduziert werden, was insgesamt dazu führt, dass beispielsweise die Temperaturerfassung an einem Ort innerhalb des Scheinwerfers ausreichen kann, um eine hinreichend genaue Kompensation der wärmebedingten Lageänderung des Scheinwerfers zu gewährleisten. Allgemein bedeutet dies, dass es in manchen Fällen ausreichend ist, je Betriebsparameter-Typ nur einen Sensor vorzusehen. Die Erfindung kann allerdings dahingehend weiterentwickelt werden, indem mehrere unterschiedliche Betriebsparameter für die Kompensation berücksichtigt werden.

Es ist günstig, wenn zumindest zwei Lichtmodule von dem Modulträger getragen werden und mittels des Kompensationsmechanismus gemeinsam gesteuert werden. Dadurch wird erreicht, dass ein gemeinsamer hinterlegter Referenzwert, das heißt ein gemeinsamer Korrekturparameter, für den gesamten Modulträger bestimmt wird. Mit anderen Worten ist es nicht nötig, für jede Bauart eines Scheinwerfers oder Lichtmoduls, einen gesonderten Referenzwert zu hinterlegen und zu kompensieren, sondern für alle Lichtmodule gemeinsam eine Kompensation durchzuführen. Dies ist deshalb möglich, da eine Dejustage einer beweglichen Verbindung eines Lichtmoduls, wie die Drehachse einer Leuchtweitenregelung, in einem stärkeren Ausmaß auftritt als eine Dejustage einer starren Verbindung, wie die zwischen zwei fest miteinander verbundenen Bauteilen.

Die zumindest zwei Betriebsparameter können aus Sensordaten der zumindest zwei Sensoren ermittelt werden. Durch die erreichte Minimierung oder Kompensierung der Betriebs- und Montageeinflüsse auf die Einbauposition und Einbaulage eines Scheinwerfers beziehungsweise der durch den in einer Einbaulage des Scheinwerfer auf die Fahrbahn projizierten Lichtbilder kann auch erreicht werden, dass höhere Toleranzen hinsichtlich dem Langzeitverhalten von Betriebs- und Montageeinflüssen für den Scheinwerfer zulässig sein können und der Scheinwerfer folglich kostengünstiger hergestellt werden kann. Ferner kann die Kompensierung während des Betriebs des Scheinwerfers automatisch erfolgen, wobei außerdem kein komplexer Scheinwerfer-Prüfstand zum Einstellen eines projizierten Lichtbilds erforderlich ist.

Es ist erfindungsgemäß vorgesehen, dass ein Betriebsparameter ein Temperaturparameter des Fahrzeugscheinwerfers ist und das Sensormittel einen Temperatursensor umfasst. Die Verstellung der Einbaulage des Fahrzeugscheinwerfers ist häufig besonders stark von der Betriebstemperatur des Fahrzeugscheinwerfers bestimmt. Der Temperaturparameter wird aus Sensordaten des Temperatursensors ermittelt.

Es können auch andere Betriebsparameter durch Sensoren erfasst werden, wie beispielsweise die Luftfeuchtigkeit mit einem Luftfeuchtigkeits-Sensor oder die Alterung des Scheinwerfers mit einem Zeitmesser als Sensor. Ebenso kann das Maß an Vibrationen über die Betriebsdauer des Scheinwerfers beispielsweise durch eine Mittelwertbildung der durch einen Vibrations-Sensor bestimmten Vibrations-Werte ermittelt werden, was als Indikator für eine mechanische Verstellung herangezogen wird und als Stellgröße in Form des Referenzwerts für eine entsprechende Kompensation durch die Leuchtweitenregelung genützt wird. Daher ist es vorteilhaft, wenn ein Betriebsparameter ein Vibrationsparameter des Fahrzeugscheinwerfers ist und das Sensormittel einen Beschleunigungssensor umfasst. Der Vibrationsparameter kann aus Sensordaten des Beschleunigungssensors beispielsweise durch Bildung Mittelwerts ermittelt werden.

Erfindungsgemäß ist ein weiterer Betriebsparameter ein Betriebszeitparameter oder ein Lebenszeitparameter des Fahrzeugscheinwerfers und das Sensormittel umfasst zumindest eine Uhr. Dadurch können alterungsbedingte Beeinträchtigungen, welche statistisch in Form von Referenzwerten im Speicher hinterlegt sind, mittels einer entsprechenden Kompensation durch die Leuchtweitenregelung ausgeglichen werden.

Erfindungsgemäß wird ein Alterungsprozess in der Montage und Justage des Scheinwerfers durch zumindest einen Betriebsparameter erfasst und kann kompensiert werden. Mit anderen Worten kann durch den weiteren Betriebsparameter auf die Justage über eine sehr lange Betriebsdauer, beispielsweise über mindestens zehn, oder mindestens hundert oder auch mehr Inbetriebnahmen des Fahrzeugs, oder über mindestens 100, oder mindestens 1000 oder auch mehr Betriebsstunden des Fahrzeugs und die damit verbundene Auswirkung auf die Justage des Scheinwerfers geschlossen werden und entsprechend kompensiert werden. Bei der Erfassung der Alterung kann beispielsweise eine kombinierte Auswertung von Vibrationen einer bestimmten Amplitude über eine bestimmte Zeit ein Kriterium für die Kompensation sein. Die Anzahl der Inbetriebnahmen oder der Betriebsstunden kann durch das Sensormittel, beispielsweise einen oder mehrere, (Inbetriebnahme-) impuls- oder zeitgesteuerte elektronische Zähler, ermittelt werden.

Es ist auch vorteilhaft, wenn mehrere Listen für unterschiedliche Betriebsparameter im Speicher abgelegt sind. Das Steuergerät berücksichtigt mehrere Betriebsparameter, die durch mehrere entsprechende Sensoren erfasst sind, um mittels der Listen und der Betriebsparameter die Leuchtweitenregelung anzusteuern. Daher umfasst das Sensormittel zumindest zwei Sensoren, welche unterschiedliche Betriebsparameter erfassen und beim Auslesen aus dem Speicher zumindest zwei Referenzwerte der betreffenden Betriebsparameter verwendet und die Betriebsparameter miteinander kombiniert werden. So kann erfindungsgemäß eine temperaturabhängige bzw. alterungsabhängige Dejustage für den gesamten Scheinwerfer kompensiert werden.

Ferner ist es günstig, wenn jeder Referenzwert aus einer Liste ausgewählt ist, wobei die Liste im Speicher gespeichert ist und die Liste Referenzwerte für jeweils unterschiedliche Werte für den Betriebsparameter beinhaltet. Dadurch wird erreicht, dass durch einen "lookup-table" ein einfacher Weg geschaffen wird, um eine präzise und kostengünstige Kompensation einer Verstellung der Einbaulage mittels der Leuchtweitenregelung des Scheinwerfers umzusetzen. Der "lookup-table" kann für eine jeweilige Ausführung eines Scheinwerfers sehr einfach auf einem Prüfstand ermittelt werden. Mit anderen Worten muss der "lookup-table" nicht für jeden einzelnen produzierten Scheinwerfer individuell bestimmt werden, sondern für ein Modell kann eine einmalige Bestimmung des "lookup-table" ausreichen.

Es ist besonders vorteilhaft, wenn das zumindest eine Lichtmodul ein Fernlicht-Lichtmodul oder ein Abblendlicht-Lichtmodul ist, da hierfür gesetzliche Vorschriften für die höchstzulässigen Leuchtstärke- beziehungsweise Intensitätswerte streng eingehalten werden müssen und folglich die erfindungsgemäße Kompensation einen Verschiebung der Lichtverteilung mit Intensitätswerten in unzulässige Bereiche besonders günstig ist.

Ferner ist es günstig, wenn zumindest zwei Lichtmodule vom Modulträger des Fahrzeugscheinwerfers umfasst sind. Dadurch kann eine Kompensation sämtlicher Lichtmodule gemeinsam durch eine gemeinsame Leuchtweitenregelung des Scheinwerfers erfolgen, was zu einem einfachen System mit Kostenvorteilen führt. Eine bezügliche getrennte Kompensation zweier individueller Lichtmodule wäre deutlich aufwendiger und teurer.

Dabei ist es außerdem günstig, wenn die Stelleinrichtung einen Schrittmotor umfasst, da dadurch eine besonders einfache Realisierung der Erfindung ermöglicht ist.

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in
- Fig. 1: ein Blockschaltbild eines erfindungsgemäßen Scheinwerfers,
- Fig. 2: ein Beispiel für eine Tabelle von Referenzwerten,
- Fig. 3: eine verstellbare Anordnung zum Einstellen eines Lichtmoduls gemäß einem ersten Ausführungsbeispiel in einer perspektivischen Ansicht,
- Fig. 3a: eine verstellbare Anordnung zum Einstellen eines Lichtmoduls gemäß einem zweiten Ausführungsbeispiel in einer perspektivischen Ansicht,
- Fig. 4: eine Detailansicht des Stellantriebs der Fig. 3a in Draufsicht, und
- Fig. 5: eine Detailansicht des Stellantriebs wie in Fig. 3a, jedoch in zerlegtem Zustand.

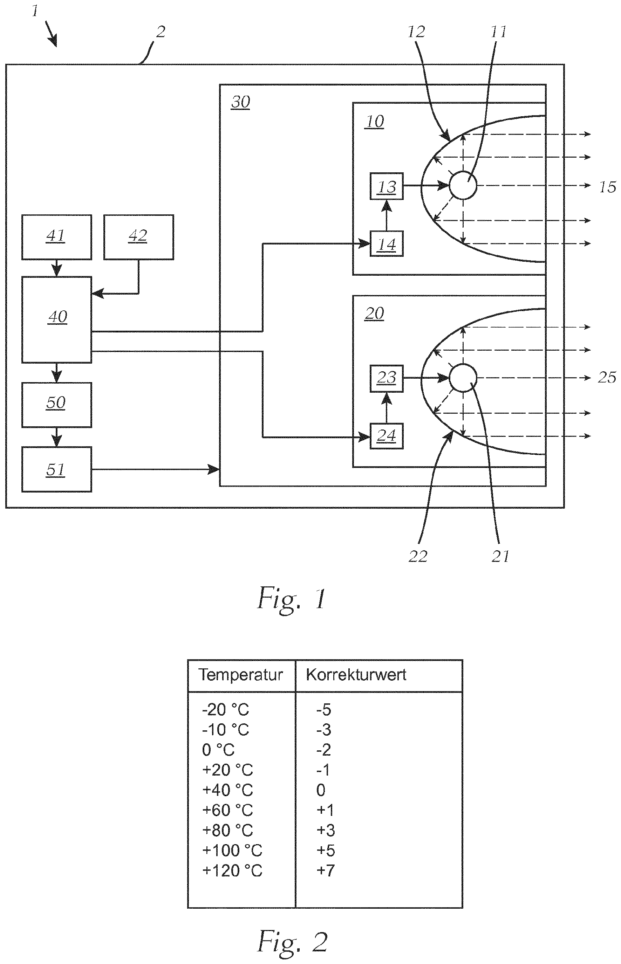

Unter Bezugnahme auf **Fig. 1** bis **5** werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, Ansteuerungselektronik, weitere optische Elemente, mechanische Verstelleinrichtungen beziehungsweise Halterungen nicht im Detail gezeigt.

**Fig. 1** zeigt einen Fahrzeugscheinwerfer 1, umfassend ein Scheinwerfergehäuse 2, zwei Lichtmodule 10 und 20, welche eingerichtet sind jeweils einen Lichtstrahl 15 beziehungsweise 25 zu emittieren. Als Lichtstrahl 15, 25 ist in diesem Zusammenhang abgestrahltes Licht zu verstehen, das beispielsweise eine Abblendlicht- oder Fernlicht-Lichtverteilung oder eine variable Lichtverteilung umfasst.

In diesem Ausführungsbeispiel umfassen die Lichtmodule 10 und 20 Lichtquellen 11, 12 in Form von Halbleiter-Lichtquellen, die eingerichtet sind Licht 15, 25 zu emittieren und mittels einem Reflektor 12, 22 in Form eines Lichtbildes vor ein Fahrzeug abstrahlen. Die Formgebung des Reflektors 12, 22 bestimmt die Abstrahlcharakteristik des Lichtmoduls 10, 20 des Fahrzeugscheinwerfers 1. Die Lichtquellen 11, 12 sind beispielsweise LEDs oder Laserdioden, und werden durch eine Leistungselektronik 13, 23 in Form von Treibertransistoren, die Stromquellen bilden, angesteuert. Die funktionelle Ansteuerung erfolgt durch jeweils eine Modul-Steuerelektronik 14, 24 des jeweiligen Lichtmoduls 10, 20. Alternativ ist es möglich, dass ein Lichtmodul eines Fahrzeugscheinwerfers eingesetzt wird, das keinen Reflektor zur Formung eines Lichtbildes verwendet, sondern beispielsweise Linsen, Blenden oder Lichtleiter zur Formung eines Lichtbildes nützt.

Das Lichtmodul 10, 20 kann auch weitere optische Elemente, wie beispielsweise Digitale Mikrospiegelanordnungen umfassen, deren Mikrospiegel einzeln ansteuerbar und verschwenkbar sind und auf diese Weise ein variables Licht erzeugen können.

Ferner umfasst der Fahrzeugscheinwerfer 1 einen Modulträger 30, der die zwei Lichtmodule 10 und 20 trägt und welcher neigbar im Scheinwerfergehäuse 2 gelagert ist, um das zumindest eine Lichtmodul 10, 20 zu neigen.

Außerdem umfasst der Fahrzeugscheinwerfer 1 ein Steuergerät 40, das ein Sensormittel 41 und einen Speicher 42 beinhaltet und welches eingerichtet ist, mittels des Sensormittels 41 zumindest zwei Betriebsparameter des Fahrzeugscheinwerfers 1 zu erfassen. In diesem Ausführungsbeispiel steuert das Steuergerät 40 jeweils die Modul-Steuerelektronik 14, 24 an, um die Scheinwerferfunktionen zu bedienen.

In diesem Ausführungsbeispiel ist ein Betriebsparameter ein Temperaturparameter des Fahrzeugscheinwerfers 1 und das Sensormittel 41 umfasst einen Temperatursensor. In diesem Ausführungsbeispiel ist das Temperatursensormittel 41 innerhalb des Scheinwerfergehäuses 2 gelegen. Das Temperatursensormittel 41 kann zusätzlich auch dazu verwendet werden, den ordnungsgemäßen Betrieb der Lichtquelle 11, 12 zu überwachen oder einen Defekt der Lichtquelle 11, 12 zu detektieren. Der Temperaturparameter kann aus Sensordaten des Temperatursensors ermittelt werden. Ein weiterer Parameter beschreibt die Betriebszeit oder die Lebenszeit des Scheinwerfers und das Sensormittel umfasst eine Uhr oder die Betriebszeit wird durch eine Anzahl an Inbetriebnahmen ermittelt.

Darüber hinaus können weitere Betriebsparameter auch andere physikalische Größen beschreiben, wie beispielsweise Vibrationen, Luftfeuchtigkeit, und das Sensormittel entsprechende Sensoren, wie Geschwindigkeitssensoren, Beschleunigungssensoren, Uhren, Hygrometer, umfassen. In manchen Anwendungen kann es sinnvoll sein, mehr als zwei Messgrößen simultan zu erfassen, wobei es die Messungen selbst auch zeitlich verschoben durchgeführt werden kann. Aus den mehreren Messgrößen kann ein gemeinsamer Korrekturwert ermittelt werden, welcher aus mehreren Referenzlisten mit mehreren Referenzwerten ausgewählt ist und welcher zur Korrektur der Leuchtweitenregelung herangezogen wird. Somit umfasst das Sensormittel 41 auch zumindest zwei Sensoren, welche unterschiedliche Betriebsparameter erfassen. Beim Auslesen aus dem Speicher 42 werden zumindest zwei Referenzwerte der betreffenden Betriebsparameter verwendet. Zusätzlich umfasst der Fahrzeugscheinwerfer 1 eine Baugruppe 50 zur Leuchtweitenregelung, die eine zwischen dem Scheinwerfergehäuse 2 und dem Modulträger 30 angeordnete Stelleinrichtung 51 umfasst, welche eingerichtet ist, den Modulträger 30 bezüglich des Scheinwerfergehäuses 2 zu neigen.

Die im Speicher 42 hinterlegten Referenzwerte können experimentell auf einem Prüfstand ermittelt werden. Dabei wird der Fahrzeugscheinwerfer 1 beispielsweise künstlich Betriebstemperaturen ausgesetzt, die durch einen Temperaturzyklus in einer Klimakammer erzeugt werden. Bei jeder festgelegten Betriebstemperatur wird die jeweilige Auswirkung für die Lage des Lichtbilds auf einer Prüfleinwand vor dem Fahrzeugscheinwerfer 1 gemessen und ein Korrekturwert ermittelt, mit dem eine Leuchtweitenregelung angesteuert werden muss, um eine Kompensation der thermisch bedingten Verstellung des Lichtbildes zu bewirken. Die Korrekturwerte entsprechen den Referenzwerten für die jeweilige Betriebstemperatur und bilden gemeinsame die Liste an Referenzwerten, die im Speicher 42 hinterlegt wird.

**Fig. 2** zeigt ein Beispiel für einen "lookup-table", also eine Tabelle bzw. Liste von Referenzwerten zur Ansteuerung der Leuchtweitenregelung, hier in Form von positiven und negativen Korrekturwerten bzw. Inkrementwerten für einen Schrittmotor als Stelleinrichtung 51, in Abhängigkeit der Betriebstemperatur des Scheinwerfers, der im Speicher 42 abgelegt ist. Es wird als Referenzwert ein - wahlweise absoluter oder relativer - Korrekturwert für die Winkellage der Leuchtweitenregelung verwendet, der durch ein Winkelinkrement des Schrittmotors bewirkt wird, wobei der Korrekturwert gegenüber der Normallage im Ruhezustand des Scheinwerfers, hier der Vertikalwinkel gegenüber dem Horizont, gemessen wird. Es ist günstig, wenn das Temperatursensormittel 41 zur Erfassung der Betriebstemperatur des Scheinwerfers in der Nähe einer Lichtquelle 11 oder 21 gelegen ist.

Das Steuergerät 40 in Fig. 1 verwendet die zumindest zwei erfassten Betriebsparameter beim Auslesen der im Speicher 42 hinterlegten Referenzwerte.

Ferner übergibt das Steuergerät 40 den Korrekturwert an die Baugruppe 50 zur Leuchtweitenregelung, welche die Stelleinrichtung 51 unter Verwendung des Korrekturwertes ansteuert.

Der Referenzwert ist aus einer Liste ausgewählt, wobei die Liste im Speicher 42 gespeichert ist und die Liste Referenzwerte für jeweils unterschiedliche Werte für den Betriebsparameter beinhaltet. Dadurch wird ein "lookup-table" für Korrekturwerte gebildet, mit dem thermisch bedingte Verstellungen des Lichtbildes vor dem Fahrzeug kompensiert werden können. Es wird auch die Alterung des Scheinwerfers als weiterer Betriebsparameter erfasst.

Es können auch andere Betriebsparameter durch Sensoren erfasst werden, wie beispielsweise die Luftfeuchtigkeit mit einem Luftfeuchtigkeits-Sensor. Ebenso kann das Maß an Vibrationen über die Betriebsdauer des Scheinwerfers durch einen Vibrations-Sensor in Form eines Beschleunigungsmess-Sensors, beispielsweise in MEMS-Technologie ("micro electro mechanical system"), ermittelt werden, das als Indikator für eine mechanische Verstellung herangezogen wird und als Stellgröße in Form des Referenzwerts für eine entsprechende Kompensation durch die Stelleinrichtung der Leuchtweitenregelung genützt wird.

Mehrere Betriebsparameter werden erfasst und für eine entsprechende Kompensation durch die Leuchtweitenregelung genützt, so weisen die entsprechenden Referenzwerte auch untereinander eine Abhängigkeit auf und ein "lookup-table" für Korrekturwerte umfasst mehrere Referenzwerte in Form einer oder mehrerer Tabellen.

Die Temperaturabhängigkeit wird mit einer zeitlichen Abhängigkeit des Scheinwerfers kombiniert und eine entsprechende Korrektur dieser beiden Parameter erfolgt simultan durch die Stelleinrichtung der Leuchtweitenregelung.

Die zwei Lichtmodule 10 und 20 sind beispielsweise ein Fernlicht-Lichtmodul und ein Abblendlicht-Lichtmodul, die vom Fahrzeugscheinwerfer 1 umfasst sind.

Die Stelleinrichtung 51 umfasst in diesem Ausführungsbeispiel einen Schrittmotor.

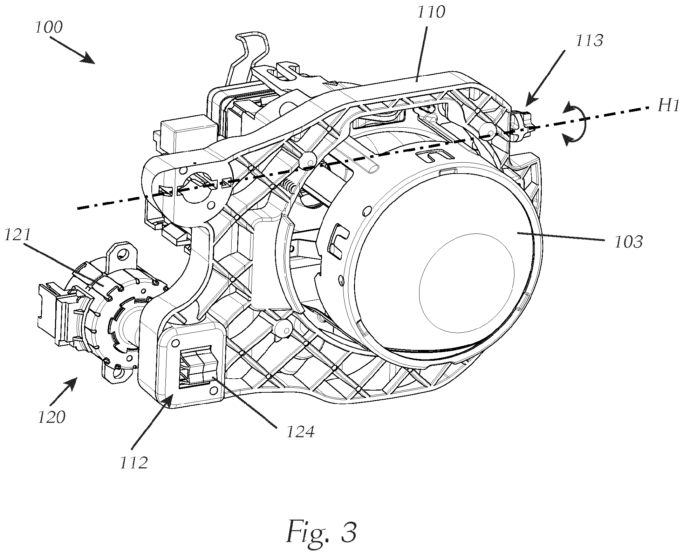

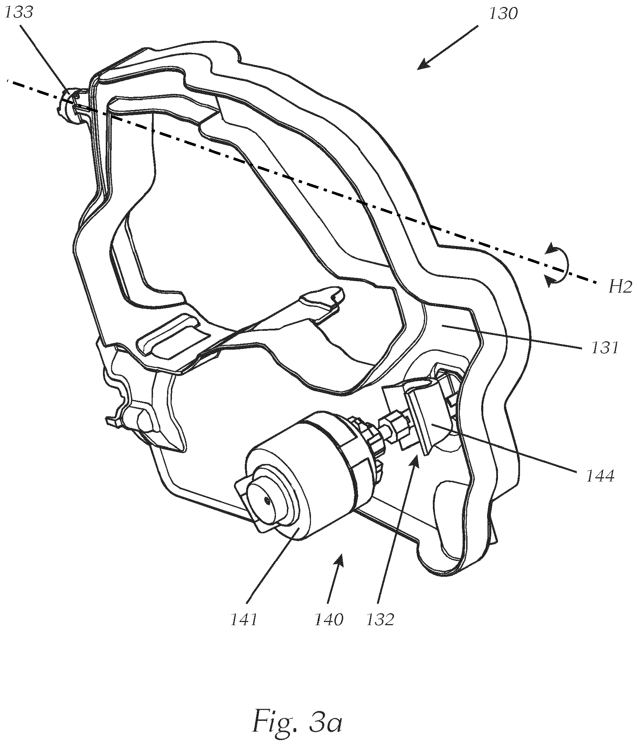

**Fig. 3** zeigt ein weiteres Beispiel eines Fahrzeugscheinwerfers 100, der eine Lichtquelle und eine Projektionslinse 103, welche in einer Ausnehmung einer ersten Ausführungsform eines Modulträgers beziehungsweise Modulträgers 110 befestigt ist, umfasst. Der Modulträger 110 weist eine erste Aufhängung 113 auf, durch die der Modulträger 110 beispielsweise mit einem Gehäuse des Fahrzeugscheinwerfers 100 in einer Einbaulage um eine horizontale orientierte Drehachse H1 des Fahrzeugscheinwerfers 100 drehbar verbunden werden kann. Außerdem weist der Modulträger 110 in einem radialen Abstand von der Drehachse H1 eine Aufnahme 112 auf, über die eine Stelleinrichtung 120 den Modulträger 110 bewegen kann, indem eine Linearbewegung der Stelleinrichtung 120 quer zur Drehachse H1 ausgeführt und so eine Drehung des Modulträgers 110 um die Drehachse H1 bewirkt werden kann.

Die so erwirkte Drehbewegung soll eine Drehung des vom Fahrzeugscheinwerfer 100 durch die Projektionsoptik 103 projizierte Lichtbild um die horizontale Achse H1 bewirken, und dadurch ermöglichen, die Leuchtweite des durch den Fahrzeugscheinwerfer 100 projizierten Lichtbilds zu variieren. Für eine solche Leuchtweitenregelung ist es ausreichend, eine Drehung nur innerhalb geringer Winkel, beispielsweise unter 10°, bevorzugt unter 5°, durchzuführen. Folglich ist es ausreichend, wenn die Aufnahme 112 konstruktiv eher einfach ausgelegt ist, um eine Konvertierung einer Linearbewegung der Stelleinrichtung 120 in eine Drehbewegung des Modulträgers 110, der ein Lichtmodul mit der Projektionslinse 103 hält, auszuführen.

Die Stelleinrichtung 120 umfasst einen Stellmotor 121 und eine damit verbundene Stellstange, die einen Kopf aufweist, welcher in einem Aufnahmeelement 124 gelagert ist. Das Aufnahmeelement 124 ist in einer Aufnahme 112 des Modulträgers 110 fixiert ist.

**Fig. 3a** zeigt eine weitere Ausführungsform eines Modulträgers 130, welcher mit einer Stelleinrichtung 140 verbunden ist. Die Stelleinrichtung 140 umfasst einen Stellmotor 141 und eine damit verbundene Stellstange, die einen Kopf aufweist, welcher in einem Aufnahmeelement 144 gelagert ist. Das Aufnahmeelement 144 ist in einer Aufnahme 132 des Modulträgers 130 fixiert. Der Modulträger 130 weist eine erste Aufhängung 133 auf, durch die der Modulträger 130 beispielsweise mit einem Gehäuse des Fahrzeugscheinwerfers um eine horizontale orientierte Drehachse H2 in einer Einbaulage des Fahrzeugscheinwerfers drehbar verbunden werden kann.

Die erste Ausführungsform des Modulträgers 110 nach der Fig. 3, sowie die zweite Ausführungsform des Modulträgers 130 nach der Fig. 3a unterscheiden sich durch die Ausführung des Modulträgers, was hinsichtlich der Funktion der Leichtweitenregelung des Scheinwerfers unerheblich ist. Folglich gelten die diesbezüglichen Beschreibungen gleichermaßen.

Bezugnehmend auf Fig. 3a umfasst eine verstellbare Anordnung gemäß dem Ausführungsbeispiel neben einem verstellbaren Modulträger 130 selbst, in dem ein (nicht gezeigtes) Lichtmodul gehalten wird, eine Stelleinrichtung 140, mit dem der Modulträger 130 hinsichtlich seiner Lage verstellt werden kann, z.B. kann seine Winkellage um eine horizontale Achse verschwenkbar sein. Der Modulträger 130 weist beispielsweise einen umrandeten Boden 131 sowie eine Aufnahme 112 zum Halten des Lichtmoduls auf und wird mit letzterem gemeinsam als Ganzes verstellt; die Aufnahme 112 ist als z.B. fensterartige Öffnung in dem Boden 131 ausgebildet, in die das Lichtmodul eingesetzt und dort festgelegt werden kann. Die Stelleinrichtung 140 zum Verstellen/Verschwenken des Modulträgers 130, genauer eine Antriebskomponente des Stellantriebs, ist mit einem Gegenstück im Modulträger 130 gelenkig verbunden, sodass eine Auslenkung des Stellantriebs direkt in eine Verstellungsbewegung, z.B. Verschwenkung, des Modulträgers 130 umgesetzt wird. Somit ist das Lichtmodul in seiner (z.B. vertikalen) Ausrichtung mithilfe der Stelleinrichtung 140 einstellbar; auf diese Weise kann beispielsweise eine Leuchtweitenregelung des Scheinwerfers erreicht werden.

Der Modulträger 130 bildet eine einstellbare "Schnittstelle" zum Scheinwerfer. Der Modulträger 130 kann so an den jeweiligen Scheinwerfer angepasst werden; bei Bedarf kann er auch andere Module halten, die dann mit referenziert werden können. Es ist in der Regel notwendig, die vertikale Ausrichtung des Lichtmoduls, somit die Stellung des Stellantriebs 140, zu kalibrieren. Dies ist insbesondere bei einem durch einen Schrittmotor 141 implementierten Antrieb in der Regel erforderlich, zumal ein Schrittmotor 141 häufig nur inkrementell angesteuert wird. Zur Kalibrierung wird ein Referenzlauf durchgeführt, durch den die Positionierung der Halterung - bzw. der Leuchtweitenregelung - ermittelt wird. Auf diese Weise kann eine Nullposition bestimmt oder festgelegt werden, und nachfolgend werden von dieser Position ausgehend die Auslenkungen des Antriebs bzw. Verfahrschritte des Schrittmotors 141 gezählt, um die aktuelle Position des Antriebs / Schrittmotors zu erfassen.

Der Modulträger 130 kann mit dem Fahrzeug über eine Aufhängung 133 drehbar beziehungsweise gelenkig verbunden sein. Die Verstellbewegung kann somit eine Leuchtweitenregelung eines Scheinwerfers ausführen.

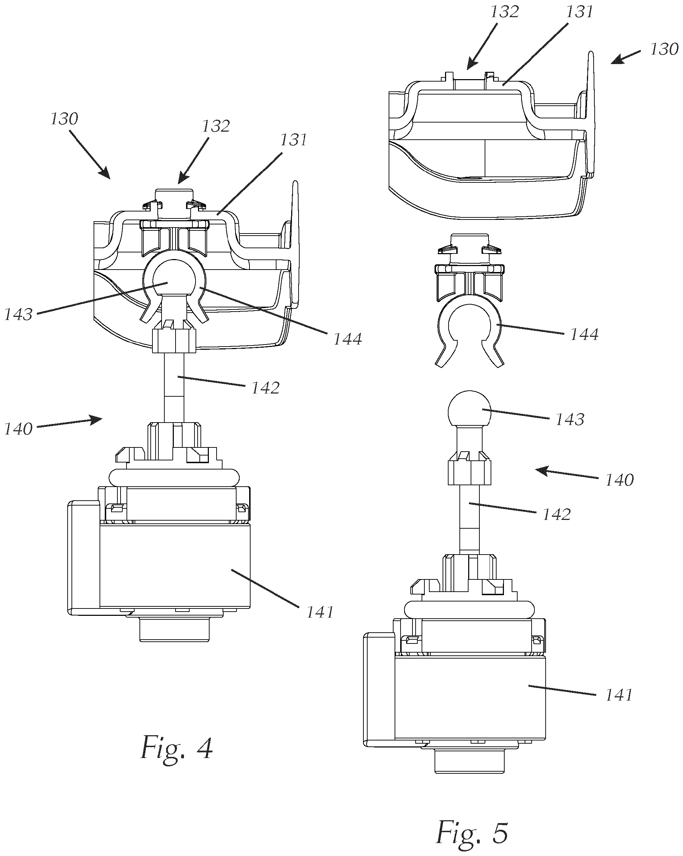

In **Fig. 4** und **Fig. 5** sind die einzelnen Komponenten der Stelleinrichtung 140 für die Leuchtweitenregelung in einer Aufsicht bzw. einer entsprechenden Explosionsansicht dargestellt. Die Stelleinrichtung 140 umfasst einen Stellmotor 141, der beispielsweise als Linearmotor zum Antrieb einer zugehörenden Stellstange 142 verwirklicht ist, die die erwähnte Antriebskomponente des Stellantriebs 140 darstellt und an deren Ende ein Kopf 143 ausgebildet ist. Der Kopf 143 greift in ein Aufnahmeelement 144, das das erwähnte Gegenstück des Modulträgers 130 verwirklicht, ein und bildet so ein Gelenk. Das Aufnahmeelement 144 für den Kopf 143 ist zugleich ein mit dem Modulträger 130 fest verbindbares Element. Hierzu wird es in dem Modulträger 130 an einer hierfür vorgesehenen Befestigungsstelle beziehungsweise Aufnahme 132, z.B. in Form einer Öffnung im Boden 131, eingesetzt und dort arretiert, beispielsweise durch eine Rast- oder Schnappverbindung. Über den Kopf 143 ergibt sich eine gelenkige Verbindung, durch die die Linearbewegung des Stellmotors 141 in eine angetriebene Bewegung (z.B. Verschwenkung) des Modulträgers 130 umgesetzt wird.

Das Aufnahmeelement 144 kann durch ein, im Wesentlichen u-förmiges, längs erstrecktes Profil gebildet sein, das geeignet ist, den Kopf 143, der durch die Stellstange 142 mit dem Stellmotor 141 verbunden ist, formschlüssig aufzunehmen. Das u-förmige Profil kann in dessen Längserstreckung in der Einbauposition des Scheinwerfers in einem Fahrzeug im Wesentlichen vertikal ausgerichtet sein.

In einer Ausführungsvariante kann der Stellmotor auch eine andere Bewegungsart verwirklichen, z.B. kann er als Drehmotor eine Rotationsbewegung bewirken, die über das gelenkig angekoppelte Zwischenelement in eine Verstellbewegung des Modulträgers umgesetzt wird. In einer anderen Ausführungsvariante kann das Gegenstück als mit dem Modulträger 130 einstückige Struktur, in die der Kopf 143 bzw. im Allgemeinen die Antriebskomponente eingreift, ausgebildet sein.

Das Aufnahmeelement 144 kann eingerichtet sein bei einer Positionsänderung des Stellmotors 141 den Kopf 143 der Stelleinrichtung 140 vertikal innerhalb des u-förmigen Profils des Aufnahmeelements 144 aufwärts oder abwärts zu bewegen.

Ferner gelten die Ausführungen des Scheinwerfers 1 aus der Fig. 1 und 2 auch für den Scheinwerfer 100 und die Darstellungen und Erläuterungen der Fig. 3 bis Fig. 5.

### Bezugszeichenliste:

- 1, 100: Scheinwerfer
- 2: Scheinwerfergehäuse
- 10, 20: Lichtmodul
- 11, 21: Lichtquelle
- 12, 22: Reflektor
- 13,23: Leistungselektronik
- 14,24: Modul-Steuerelektronik
- 15, 25: Lichtstrahl
- 30,110,130: Modulträger
- 40: Steuergerät
- 41: Sensormittel
- 42: Speicher
- 50: Leuchtweitenregelung
- 51,120,140: Stelleinrichtung
- 103: Projektionslinse
- 131: Modulträger-Boden
- 112,132: Aufnahme
- 113,133: Aufhängung
- 121, 141: Stellmotor
- 142: Stellstange
- 143: Kopf
- 124,144: Aufnahmeelement
- H1, H2: Drehachse

## Patentansprüche

1. Fahrzeugscheinwerfer (1, 100), umfassend ein Scheinwerfergehäuse (2), zumindest ein Lichtmodul (10, 20), welches eingerichtet ist, einen Lichtstrahl (15, 25) zu emittieren, und ferner umfassend einen Modulträger (30, 110, 130), der das zumindest eine Lichtmodul (10, 20) trägt und welcher neigbar im Scheinwerfergehäuse (2) gelagert ist, sowie ein Steuergerät (40), das ein Sensormittel (41) und einen Speicher (42) umfasst und welches eingerichtet ist, mittels des Sensormittels (41) zumindest zwei Betriebsparameter des Fahrzeugscheinwerfers (1, 100) zu erfassen, sowie eine Baugruppe (50) zur Leuchtweitenregelung, die eine zwischen dem Scheinwerfergehäuse (2) und dem Modulträger (30, 110, 130) angeordnete Stelleinrichtung (51,120, 140) umfasst, welche eingerichtet ist, den Modulträger (30, 110, 130) bezüglich des Scheinwerfergehäuses (2) zu neigen, wobei das Steuergerät (40) die zumindest zwei erfassten Betriebsparameter beim Auslesen zumindest zwei im Speicher (42) hinterlegten Referenzwerte verwendet, und das Steuergerät (40) die zumindest zwei Referenzwerte an die Baugruppe (50) zur Leuchtweitenregelung übergibt, welche die Stelleinrichtung (51, 120, 140) unter Verwendung der zumindest zwei Referenzwerte ansteuert, wobei das Sensormittel (41) zumindest zwei Sensoren umfasst, welche unterschiedliche Betriebsparameter erfassen und beim Auslesen aus dem Speicher (42) zumindest zwei Referenzwerte der betreffenden Betriebsparameter verwendet werden, wobei ein Betriebsparameter ein Temperaturparameter des Fahrzeugscheinwerfers (1, 100) ist und das Sensormittel (41) einen Temperatursensor umfasst, wobei ein weiterer Betriebsparameter ein Betriebszeitparameter oder ein Lebenszeitparameter des Fahrzeugscheinwerfers (1, 100) ist und das Sensormittel (41) zumindest eine Uhr umfasst, oder der Betriebszeitparameter durch eine Anzahl an Inbetriebnahmen des Fahrzeugs durch das Sensormittel (41) ermittelt wird, wobei die Anzahl der Inbetriebnahmen bevorzugt größer als zehn, besonders bevorzugt größer als einhundert ist, oder der Betriebszeitparameter aus der Anzahl an Betriebsstunden durch das Sensormittel (41) ermittelt wird wobei die Anzahl der Betriebsstunden bevorzugt größer als einhundert, besonders bevorzugt größer als eintausend ist.

2. Fahrzeugscheinwerfer (1, 100) nach Anspruch 1, **dadurch gekennzeichnet, dass** ein weiterer Betriebsparameter ein Vibrationsparameter des Fahrzeugscheinwerfers (1, 100) ist und das Sensormittel (41) zumindest einen Beschleunigungssensor umfasst.

3. Fahrzeugscheinwerfer (1, 100) nach einem der vorhergehenden Ansprüche, **dadurch gekennzeichnet, dass** die zumindest zwei Referenzwerte aus einer Liste ausgewählt sind, wobei die Liste im Speicher (42) gespeichert ist und die Liste Referenzwerte für jeweils unterschiedliche Werte für den Betriebsparameter beinhaltet.

4. Fahrzeugscheinwerfer (1, 100) nach einem der vorhergehenden Ansprüche, **dadurch gekennzeichnet, dass** das zumindest eine Lichtmodul (10, 20) ein Fernlicht-Lichtmodul oder ein Abblendlicht-Lichtmodul oder ein Lichtmodul mit variabler Lichtverteilung ist, und vorzugsweise das zumindest eine Lichtmodul (10, 20) eine Halbleiter-Lichtquelle und/ oder ein DMD-Element umfasst.

5. Fahrzeugscheinwerfer (1, 100) nach einem der vorhergehenden Ansprüche, **dadurch gekennzeichnet, dass** zumindest zwei Lichtmodule (10, 20) vom Modulträger (30, 110, 130) des Fahrzeugscheinwerfers (1, 100) umfasst sind.

6. Fahrzeugscheinwerfer (1, 100) nach einem der vorhergehenden Ansprüche, **dadurch gekennzeichnet, dass** die Stelleinrichtung (51,120, 140) einen Schrittmotor umfasst.

## Claims

1. Vehicle headlamp (1, 100), comprising a headlamp housing (2), at least one light module (10, 20) which is arranged to emit a light beam (15, 25), and further comprising a module support (30, 110, 130) which supports the at least one light module (10, 20) and which is mounted tiltably in the headlamp housing (2), and a control unit (40) which comprises a sensor means (41) and a memory (42) and which is set up to detect at least two operating parameters of the vehicle headlamp (1, 100) by means of the sensor means (41), and an assembly (50) for headlight range control, which comprises an actuating device (51, 120, 140) which is arranged between the headlight housing (2) and the module support (30, 110, 130) and which is set up to incline the module support (30, 110, 130) with respect to the headlight housing (2), wherein the control device (40) uses the at least two detected operating parameters when reading out at least two reference values stored in the memory (42), and the control device (40) transmits the at least two reference values to the module (50) for headlamp levelling which actuates the actuating device (51, 120, 140) using the at least two reference values, the sensor means (41) comprising at least two sensors which detect different operating parameters and at least two reference values of the relevant operating parameters being used when reading out from the memory (42), one operating parameter being a temperature parameter of the vehicle headlamp (1, 100) and the sensor means (41) comprising a temperature sensor, a further operating parameter being an operating time parameter or a service life parameter of the vehicle headlamp (1, 100) and the sensor means (41) comprises at least one clock, or the operating time parameter is determined by a number of start-ups of the vehicle by the sensor means (41), the number of start-ups preferably being greater than ten, particularly preferably greater than one hundred, or the operating time parameter is determined from the number of operating hours by the sensor means (41), the number of operating hours preferably being greater than one hundred, particularly preferably greater than one thousand.

2. Vehicle headlamp (1, 100) according to claim 1, **characterized in that** a further operating parameter is a vibration parameter of the vehicle headlight (1, 100) and the sensor means (41) comprises at least one acceleration sensor.

3. Vehicle headlamp (1, 100) according to one of the preceding claims, **characterized in that** the at least two reference values are selected from a list, the list being stored in the memory (42) and the list containing reference values for respectively different values for the operating parameter.

4. Vehicle headlamp (1, 100) according to one of the preceding claims, **characterized in that** the at least one light module (10, 20) is a high beam light module or a low beam light module or a light module with variable light distribution, and preferably the at least one light module (10, 20) comprises a semiconductor light source and/or a DMD element.

5. Vehicle headlamp (1, 100) according to one of the preceding claims, **characterized in that** at least two light modules (10, 20) are encompassed by the module carrier (30, 110, 130) of the vehicle headlamp (1, 100).

6. Vehicle headlamp (1, 100) according to one of the preceding claims, **characterized in that** the actuating device (51, 120, 140) comprises a stepping motor.

## Revendications

1. Projecteur de véhicule (1, 100), comprenant un boîtier de projecteur (2), au moins un module de lumière (10, 20) qui est conçu pour émettre un faisceau lumineux (15, 25), et comprenant en outre un support de module (30,110,130) qui supporte le au moins un module de lumière (10, 20) et qui est monté de manière inclinable dans le boîtier de phare (2), et une unité de commande (40) qui comprend un moyen de détection (41) et une mémoire (42) et qui est configurée pour détecter au moins deux paramètres de fonctionnement du phare de véhicule (1, 100) au moyen du moyen de détection (41) et un ensemble (50) pour la mise à niveau du projecteur, qui comprend un dispositif de réglage (51, 120, 140) qui est disposé entre le boîtier du projecteur (2) et le support de module (30, 110, 130) et qui est réglé pour faire basculer le support de module (30,110,130) par rapport au boîtier du projecteur (2) dans lequel le dispositif de commande (40) utilise les au moins deux paramètres de fonctionnement détectés lors de la lecture d'au moins deux valeurs de référence stockées dans la mémoire (42), et le dispositif de commande (40) transmet les au moins deux valeurs de référence au module (50) de réglage des phares qui actionne le dispositif d'actionnement (51, 120, 140) en utilisant les au moins deux valeurs de référence, le moyen de détection (41) comprenant au moins deux capteurs qui détectent différents paramètres de fonctionnement et au moins deux valeurs de référence des paramètres de fonctionnement concernés étant utilisées lors de la lecture de la mémoire (42), un paramètre de fonctionnement étant un paramètre de température du phare de véhicule (1, 100) et le moyen de détection (41) comprenant un capteur de température, un autre paramètre de fonctionnement étant un paramètre de temps de fonctionnement ou un paramètre de durée de vie du phare de véhicule (1, 100) et le moyen de détection (41) comprenant un capteur de température, le moyen de détection (41) utilisant au moins deux valeurs de référence enregistrées dans la mémoire (42), et le dispositif de commande (40) transmettant les au moins deux valeurs de référence au module (50) pour la régulation de la portée des phares, 100) et le moyen de détection (41) comprend au moins une horloge, ou le paramètre de temps de fonctionnement est déterminé par un nombre de démarrages du véhicule par le moyen de détection (41), le nombre de démarrages étant de préférence supérieur à dix, particulièrement préférablement supérieur à cent, ou le paramètre de temps de fonctionnement est déterminé à partir du nombre d'heures de fonctionnement par le moyen de détection (41), le nombre d'heures de fonctionnement étant de préférence supérieur à cent, particulièrement préférablement supérieur à mille.

2. Projecteur de véhicule (1, 100) selon la revendication 1, **caractérisé en ce qu'**un autre paramètre de fonctionnement est un paramètre de vibration du projecteur de véhicule (1, 100) et le moyen de détection (41) comprend au moins un capteur d'accélération.

3. Projecteur de véhicule (1, 100) selon l'une quelconque des revendications précédentes, **caractérisé en ce que** les au moins deux valeurs de référence sont sélectionnées dans une liste, la liste étant stockée dans la mémoire (42) et la liste contenant des valeurs de référence pour des valeurs respectivement différentes pour le paramètre de fonctionnement.

4. Projecteur de véhicule (1, 100) selon l'une des revendications précédentes, **caractérisé en ce que** le au moins un module de lumière (10, 20) est un module de lumière à haute intensité ou un module de lumière à basse intensité ou un module de lumière à distribution de lumière variable, et de préférence le au moins un module de lumière (10, 20) comprend une source de lumière à semi-conducteur et/ou un élément DMD.

5. Projecteur de véhicule (1, 100) selon l'une quelconque des revendications précédentes, **caractérisé en ce qu'**au moins deux modules d'éclairage (10, 20) sont compris par le support de module (30, 110, 130) du projecteur de véhicule (1, 100).

6. Projecteur de véhicule (1, 100) selon l'une quelconque des revendications précédentes, **caractérisé en ce que** le dispositif d'actionnement (51,120,140) comprend un moteur pas à pas.
